Europäisches Patentamt

European Patent Office

Office européen des brevets

(11) Publication number: **0 404 534**
**A1**

## EUROPEAN PATENT APPLICATION

(21) Application number: **90306712.2**

(22) Date of filing: **20.06.90**

(51) Int. Cl.5: **G01D 5/20**

(30) Priority: **22.06.89 GB 8914377**
**16.01.90 GB 9000956**

(43) Date of publication of application:
**27.12.90 Bulletin 90/52**

(84) Designated Contracting States:
**DE FR GB IT SE**

(71) Applicant: **LUCAS INDUSTRIES PUBLIC**
**LIMITED COMPANY**
**Great King Street**
**Birmingham, B19 2XF(GB)**

(72) Inventor: **Sidhu, Karmjit Singh,**
**70 Spackmans Way, Slough**
**Berkshire(GB)**
Inventor: **Bardwell, Charles Edward,**
**33 Segsbury Grove, Bracknell,**
**Berkshire, RG12 3JL(GB)**

(74) Representative: **Gibson, Stewart Harry et al**
**URQUHART-DYKES & LORD Business**
**Technology Centre Senghennydd Road**
**Cardiff CF2 4AY South Wales(GB)**

(54) **Variable position sensor.**

(57) A position sensor comprises a sensor coil (18), a core element of high magnetic permeability material for displacing into the coil, means (OSC) for supplying an alternating current to the coil such that the voltage across the coil varies linearly with the position of the core element, and means (D1,R1,C1) responsive to the voltage across the coil to produce a d.c. output signal representing that voltage, this means acting without reference to the input a.c. signal.

FIGURE 1

## Variable Position Sensor

This invention relates to a variable position sensor, and more particularly to a sensor for giving an electrical output indicating the relative positions of two elements of the sensor.

Various devices have been proposed for giving an electrical output indicating the position of a mechanical link or actuator. One form of device comprises a potentiometer, but this is prone to wear from the sliding contacts, intermittent contact due to vibration and loss of contact due to movements at high velocity. Another type of device is the linear variable displacement transformer (LVDT), but this is limited in stroke length and involves complex windings.

We have now devised a position sensor which overcomes the above difficulties and provides an electrical output which is linearly and accurately related to position over a large range of relative positions betweeen the two movable elements of the sensor.

In accordance with this invention as seen from one aspect, there is provided a position sensor which comprises a sensor coil, a core element of high magnetic permeability material for displacing into the coil, means for supplying an alternating current to the coil such that the voltage across the coil varies linearly with the position of the core element, and means responsive to the voltage across the coil without reference to the input a.c. signal, to produce a d.c. output signal representing said voltage.

We have found that the voltage across the sensor coil can be processed quite simply to provide an output linearly related to the position of the core element relative to the sensor coil. Thus there is no need to refer or compare the voltage across the coil with the input a.c. signal with respect to phase or other parameters. For example, in one simple arrangement the a.c. voltage across the sensor coil is applied to a demodulator. In other arrangements, the voltage across the sensor coil may be applied to a rectifier, or to an AC-to-DC converter.

In one preferred embodiment, the means for supplying an alternating current to the coil comprises an alternating wave generator of constant output voltage connected across a network which includes the sensor coil. Preferably this network comprises a temperature compensating impedance in series with the sensor coil.

In another preferred embodiment, an alternating wave generator has its output connected to an operational amplifier which feeds the sensor coil. A current sensor is coupled to the coil and a voltage feedback is derived from this and applied to the operational amplifier to ensure that the current fed to the coil is of constant RMS.

A circuit may be provided to receive the d.c. output signal of the sensor, this circuit being fed from a supply voltage which can be adjusted to adjust the change in output signal per unit displacement of the core element of the sensor. This circuit preferably comprises an amplifier receiving the d.c. output signal from the position sensor and having its gain dependent upon the applied supply voltage. The sensor now emulates a linear variable potentiometer.

In accordance with this invention as seen from a second aspect, there is provided a position sensor which comprises a sensor coil, a core element of high magnetic permeability material for displacing into the coil, means for supplying an alternating current to the coil, the magnetic circuit which includes the coil and core element being operated in a linear portion of its hysteresis curve such that the voltage across the coil varies linearly with the position of the core element, and means responsive to the voltage across the coil to produce a d.c. output signal representing said voltage.

Embodiments of this invention will now be described by way of examples only and with reference to the accompanying drawings, in which:-

FIGURE 1 is a longitudinal section through an inductive displacement sensor in accordance with this invention;

FIGURE 2 is an enlarged longitudinal section through one end of the sensor of Figure 1;

FIGURE 3 is a simplified block diagram of a first embodiment of circuit in which the sensor coil may be connected to provide an output linearly related to the coil;

FIGURE 4 is a detailed diagram of one circuit based on the circuit of Figure 3;

FIGURE 5 is a detailed diagram of an alternative circuit based on the circuit of Figure 3;

FIGURE 6 is a detailed diagram of a second embodiment of circuit in which the sensor coil may be connected;

FIGURE 7 is a detailed diagram of a third embodiment of circuit in which the sensor coil may be connected;

FIGURE 8 is a simplified diagram of a fourth embodiment of circuit in which the sensor coil may be connected;

FIGURE 9 is a diagram showing the hysteresis curve of the magnetic circuit of the sensor and indicating the operating point of the sensor; and

FIGURE 10 is a diagram showing the equivalent electrical network in which the sensor is connected.

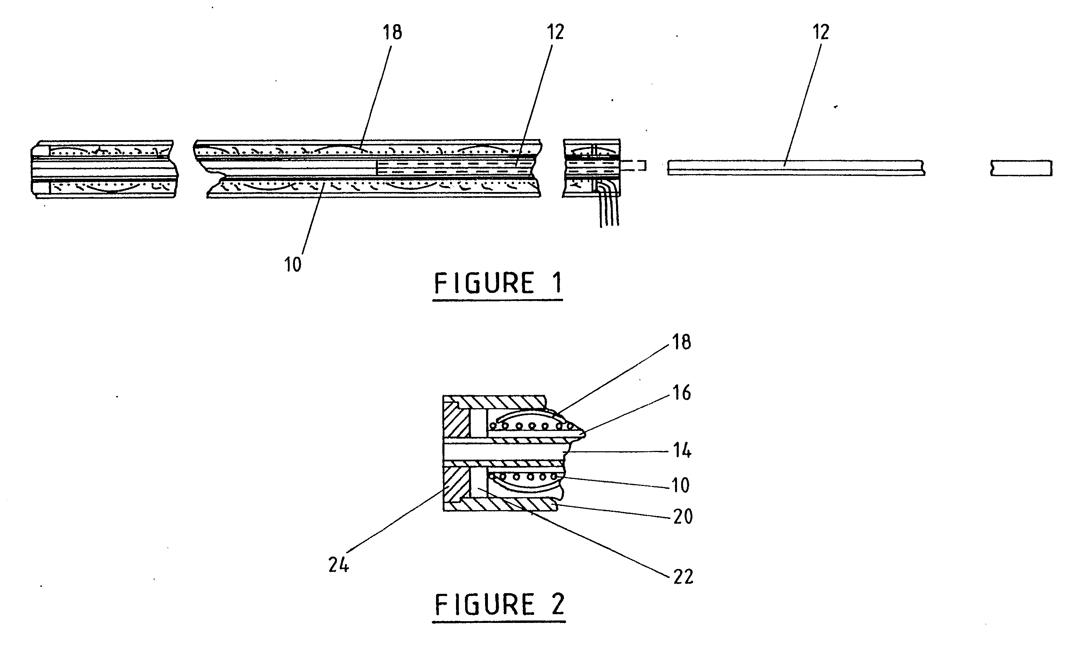

Referring to Figures 1 and 2 of the drawings, there is shown an inductive displacement sensor which comprises a coil 10 and a straight core 12 of high magnetic permeability metal which is movable lengthwise of itself and along the axis of the coil 10. The coil 10 comprises fine gauge copper wire having an insulating coating e.g. of shellac or hardenable resin, which wire is wound around a thin-walled tube 14 of non-magnetic metal which carries an insulating layer 16. A secondary coil 18 is wound around the main coil 10, for temperature compensation as will be described below. An outer tube 20 of high magnetic permeability metal surrounds the inner tube 14 and coils 10, 18. Each end of the outer tube 20 is closed by an inner disc 22 of insulating material and an outer disc 24 of metal, which discs fit within the end of the outer tube 20 and have central apertures in which the end of the inner tube 14 engage. The space between the inner and outer tubes is filled with a hardenable resin which encapsulates the coils. The ends of the two coils 10, 18 are brought out through the outer tube 20 at one end of the latter. The high permeability core comprises a rod or tube 12 which extends into the inner tube 14 from one end. In a modification, both the coils 10 and 18 may comprise Eureca wire, the two coils being of the same length and number of turns and wound in bifilar manner.

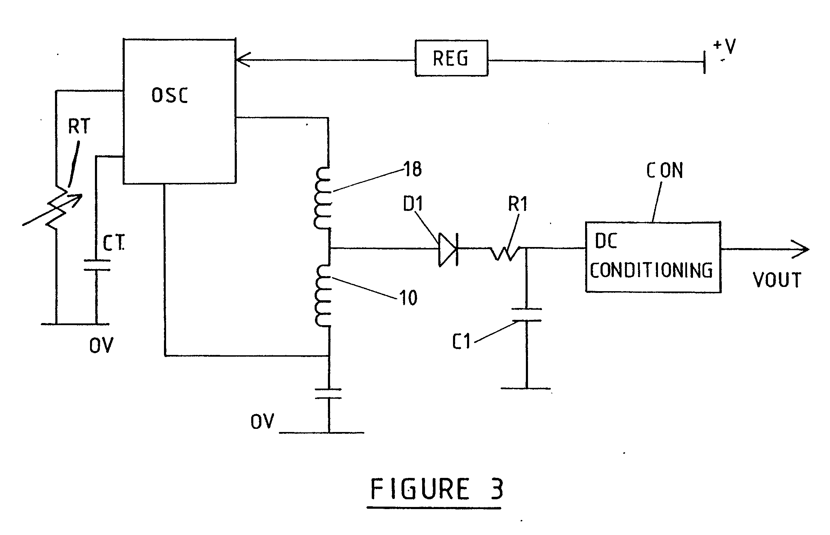

Referring to Figure 3, there is shown in simplified block diagram form, one embodiment of a circuit into which the coils 10, 18 of the inductive displacement sensor of Figures 1 and 2 may be connected, which circuit provides an output linearly related to the position of the high permeability rod or tube 12. This circuit comprises an oscillator OSC the output of which is applied across the coils 10 and 18 in series. The frequency of the oscillator is determined by a capacitor CT and an adjustable resistor RT. The oscillator is fed from the positive supply rail (typically +12 to +32 volts) through a voltage regulator REG and provides a constant voltage and constant frequency output which is preferably a constant RMS sine or triangular wave. An output is taken from the junction between the sensor coil 10 and compensation coil 18 and applied to a demodulator, which in this example comprises a peak detector formed by a series rectifier D1 and resistor R1 and a shunt capacitor C1. The output from the circuit is taken through a d.c. conditioning circuit CON.

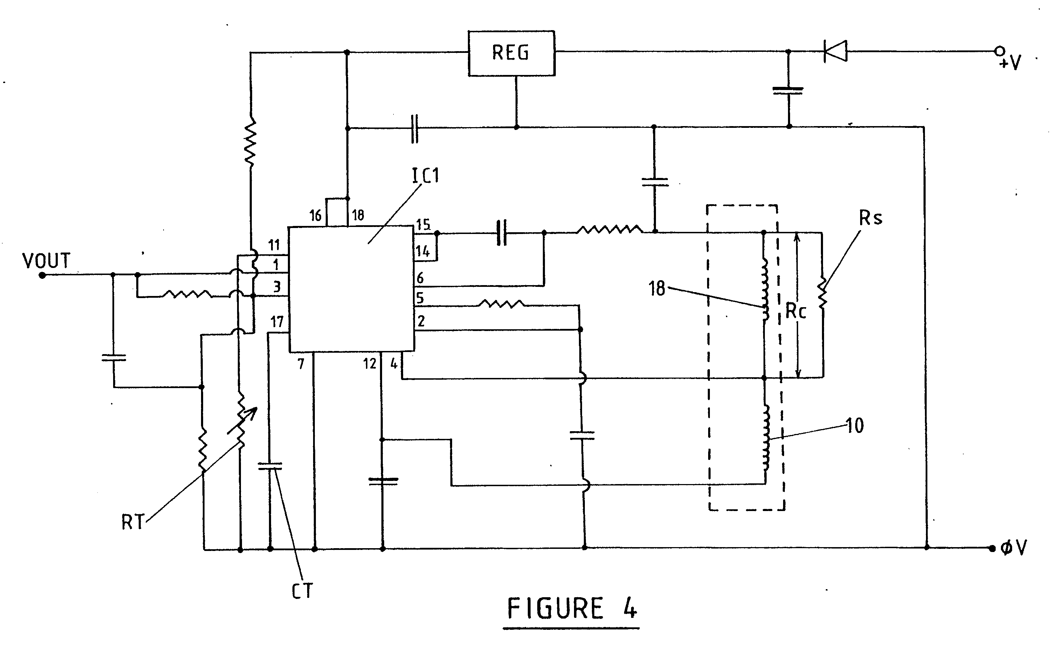

Figure 4 shows a detailed circuit based on the simplified circuit of Figure 3. This circuit includes an NE/5521N integrated circuit IC1 (manufactured by Philips) which includes the oscillator, demodulator and d.c. conditioning circuit of Figure 3. The integrated circuit IC1 is fed from the positive supply rail through a 9 volt regulator REG, which is a 78L09 device. A resistor RS, which is set on test, is connected across the compensation coil 18 to make the resistance of this parallel combination equal to the resistance of the sensor coil 10.

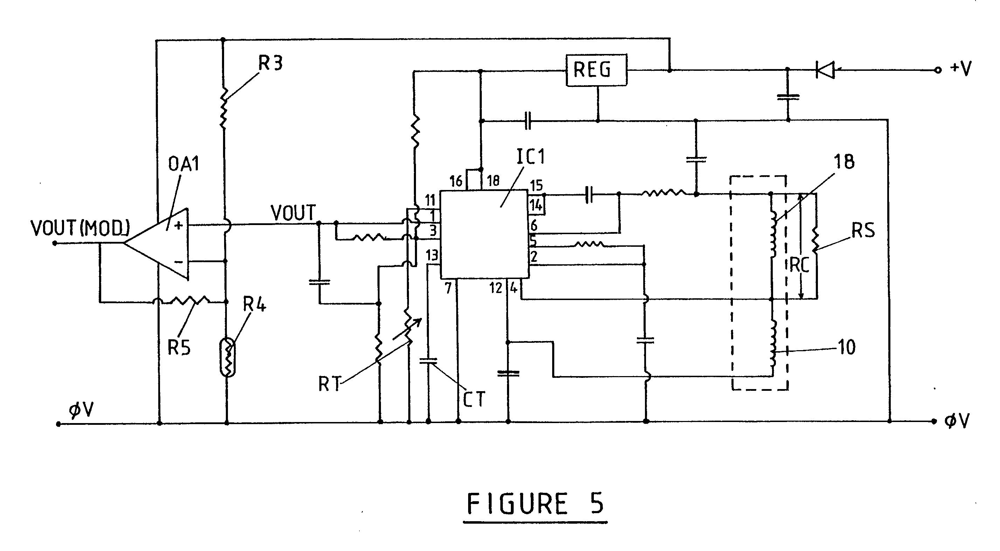

Figure 5 shows a circuit modified relative to the circuit of Figure 4, in that the output $V_{out}$ is passed to one input of an operational amplifier OA1, the other input of which is connected to the junction between two resistors R3,R4 in a series path fed from the d.c. supply, with a feedback resistor R5 connected between the input and the output of the operational amplifier. Resistor R4 has a negative temperature coefficient: thus if the d.c. supply voltage is increased for example, the current through the series path R3,R4 will increase so raising the temperature of R4 and reducing the its resistance and the potential drop across it, thus increasing the gain of the amplifier. Accordingly the gain of the operational amplifier OA1 varies with the applied d.c. supply voltage, so that by adjusting the d.c. supply voltage the change in output per unit of displacement of the sensor core element can be adjusted.

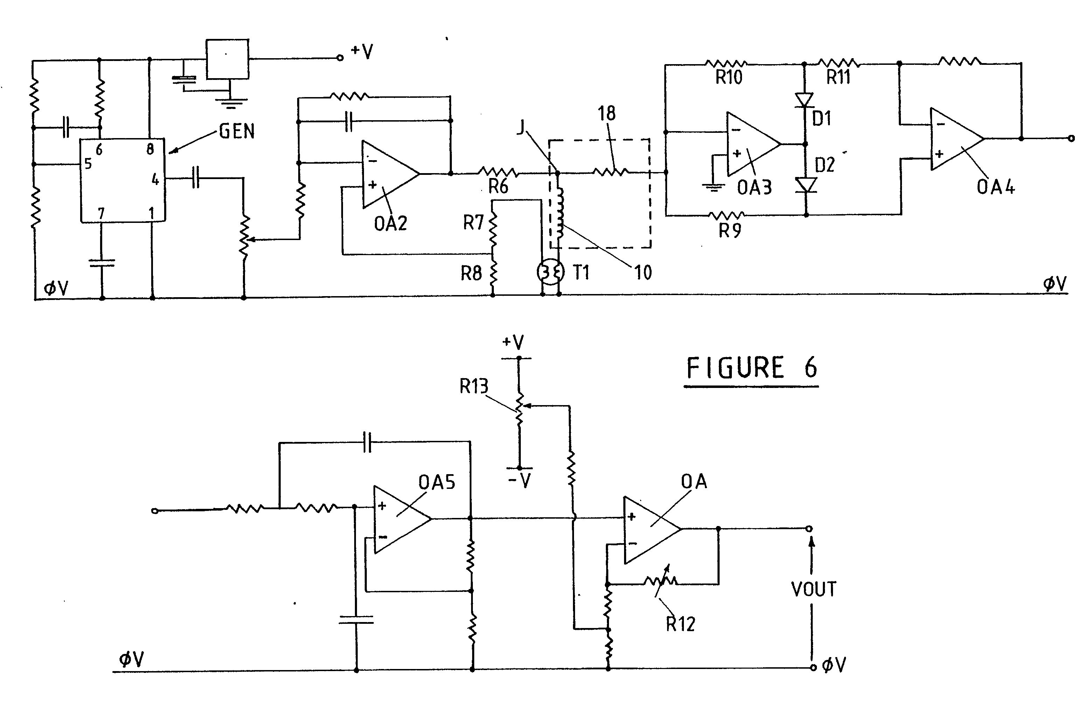

Referring to Figure 6, there is shown a second embodiment of a circuit into which the coils 10, 18 of the inductive variable sensor of Figures 1 and 2 may be connected, which circuit provides an output linearly related to the position of the high permeability rod or tube. The circuit comprises a triangular wave generator GEN based on a phase lock loop chip type NE 566. The constant frequency output from this is applied to one input of an operational amplifier OA2 providing gain but having capacitive feedback, so that it acts to slightly round the peaks of the triangular wave input. The output from the operational amplifier OA2 is connected through a series resistor R6 to one end J of the sensor coil 10, the other end of which is connected through the primary of a current transformer T1 to ground. The secondary of current transformer T1 has one end connected to ground and its other end connected through resistors R7 and R8 to ground. The junction between resistors R7 and R8 is connected to the other input (the non-inverting input) of the operational amplifier OA2.

The current transformer T1 thus provides a voltage feedback to the operational amplifier OA2, with the effect that the operational amplifier OA2 feeds a current of constant RMS and constant frequency to the sensor coil 10. As the high magnetic permeability core 12 is displaced lengthwise of the sensor coil, the supplied current remains constant but the alternating voltage across the coil varies in a linear manner.

The junction J of the sensor coil 10 with the resistor R6 is connected through the secondary, temperature compensating coil 18 to one input (the inverting input) of an operational amplifier OA3, the other input (the non-inverting input) of which is connected to ground. The temperature compensating coil 18 comprises a resistive wire and may have a few turns compared to the main coil 10, but has a positive temperature coefficient of resistance close to that of the wire from which the main coil 10 is made. As temperature rises, then for a given position of the core element 12, the resistance of the main coil, and hence the voltage across it, increases and the potential at junction J between the coils 10, 18 rises. Similarly the resistance of coil 18 increases, so the voltage dropped across it (in the potential divider chain consisting of itself and the input impedance to operational amplifier OA3) will correspondingly increase. Thus the potential at the input to the operational amplifier OA3 remains substantially unaltered with temperature for a given position of the core element 12. This operational amplifier OA3 is connected as a precision rectifier, with oppositely-poled diodes D1, D2 connected from its output and through respective resistors R10, R9 to its signal input. The gain of the amplifier OA3 is sufficient to compensate for the forward drop across the diodes. The output from the precision rectifier is applied to a gain stage comprising an operational amplifier OA4, having one input (its non-inverting input) connected directly to the cathode of diode D2 and its other (its inverting input) connected through a resistor R11 to the anode of diode D1.

The rectified and amplified output from the operational amplifier OA4 is applied through a bandpass filter (based on an operational amplifier OA5) to an output stage (based on an operational amplifier OA6 with adjustable gain and offset resistors R12, R13 respectively). The frequency band passed by the filter OA5 is below the frequency of the triangular wave output from the generator GEN.

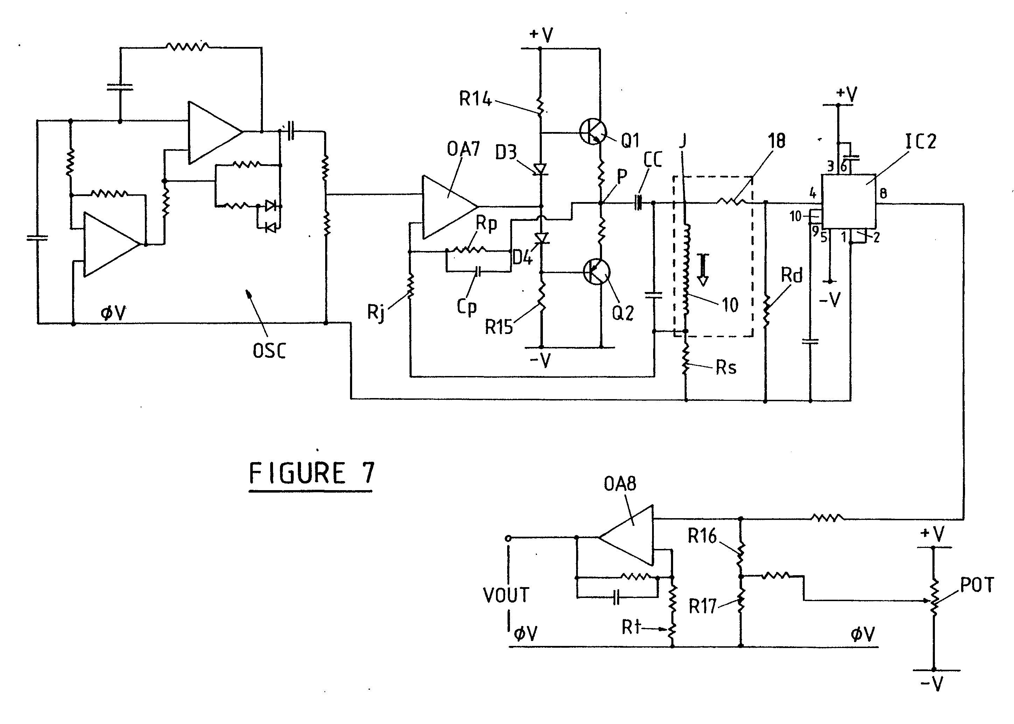

In another embodiment of circuit shown in Figure 7, the output from a sine wave oscillator OSC is applied to one input of an operational amplifier OA7. The output from this is applied to a current buffer circuit feeding the sensor coil 10: this circuit comprises npn and pnp transistors Q1 and Q2 having their collectors connected to +ve and -ve supply rails and their emitters connected through respective emitter resistors to a junction point P. The output of the operational amplifier OA7 is connected through respective diodes D3, D4 to the transistor bases, which are further connected to the +ve and -ve supply rails through resistors R14, R15. The operational amplifier OA7 thus drives the transistors Q1, Q2 and the output from these at junction point P is applied through a coupling capacitor Cc to one end J of the sensor coil 10. The other end of the sensor coil 10 is connected to ground through a resistor Rs. The voltage developed across resistor Rs is applied as voltage feedback to the input of the operational amplifier OA7 via a resistor Rf. The junction point P is connected to the same input of the operational amplifier OA7 through a resistor Rp in parallel with a capacitor Cp.

As in the circuit of Figure 6, the circuit of Figure 7 applies an alternating current to the sensor coil 10 and voltage feedback to the operational amplifier OA7 ensures that this current is of constant RMS value irrespective of the position of the high magnetic permeability core 12 of the sensor. However the voltage developed across the core varies linearly with core position.

The junction J of sensor coil 10 with coupling capacitor Cc in Figure 7 is connected to a potential divider comprising the temperature compensating coil 18 and a resistor Rd, the junction between these being connected to the input of an AC-to-DC converter chip IC2 type AD 536 AJH. The output of the AC-to-DC converter IC2 is a dc voltage linearly related to the amplitude of its ac input, and this output is applied to an output stage comprising an operational amplifier OA8. The signal input has two resistors R16, R17 connected across it to ground and the junction of these resistors is connected to a potentiometer POT for offset adjustment. The other input of the operational amplifier OA8 is connected through a resistor chain to ground, one of these resistors Rt being temperature sensitive to provide the arrangement with temperature compensation. The oscillator resistors are high stability resistors to ensure that the amplitude of the oscillator output remains constant with temperature.

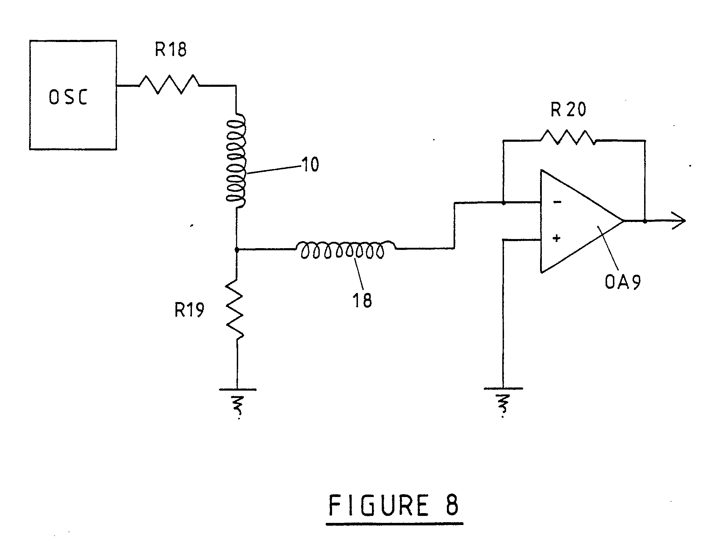

In the embodiment of Figure 8, the oscillator OSC provides an output of constant voltage and frequency, and this is applied across a network comprising a resistor R18, the sensor coil 10 and a resistor R19 in series. The junction between coil 10 and resistor R19 is connected through the compensating coil 18 to the inverting input of an operational amplifier OA9, having a feedback resistor R20 between its output and this input and having its other input connected to ground. The a.c. output of OA9 may be converted to a d.c. voltage in a simple manner as in the other embodiments. Coils 10 and 18 both comprise Eureca wire of equal length and equal number of turns, wound in bifilar manner.

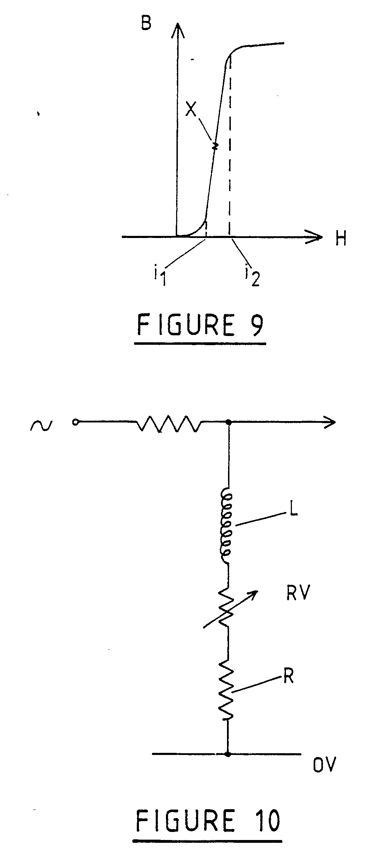

In the position sensors which have been described, the arrangement is such that the magnetic circuit which includes the sensor coil 18 and core element 12 is operated in a linear portion of its hysteresis curve irrespective of the position of the core element 12. Referring to Figure 9 there is shown the hysteresis curve for the magnetic circuit, i.e. the curve showing the relationship between the magnetic field strength H applied by the coil 10 and the resulting flux density B. Because of hysteresis losses this relationship departs from a straight line but includes a substantially linear portion, lying betweeen limits corresponding to applied current values $i_1$ and $i_2$. The corresponding electrical network for the main coil 10 can be expressed as shown in Figure 10 as comprising a fixed inductance L in series with a variable resistance Rv and a fixed (ohmic loss) resistance R. The resistance Rv varies with the core losses which are made up of hysteresis losses ($B^{1.6\sim2.5}f$) and Eddy current losses ($B^2f^2$) in the core element 12 (where f is the operating frequency). Provided the sensor 10 is operated in the linear portion of the hysteresis curve, then the output of the network is linearly related to the core position.

## Claims

1. A position sensor which comprises a sensor coil, a core element of high magnetic permeability material for displacing into the coil, means for supplying an alternating current to the coil such that the voltage across the coil varies linearly with the position of the core element, and means responsive to the voltage across the coil without reference to the input a.c. signal, to produce a d.c. output signal representing said voltage.

2. A position sensor as claimed in claim 1, in which the means for supplying an alternating current to the coil comprises an alternating wave generator of constant output voltage, connected across a network which includes the sensor coil (Figure 3).

3. A position sensor as claimed in claim 2, in which said network further comprises a temperature compensating impedance in series with the sensor coil (Figure 3).

4. A position sensor as claimed in claim 1, in which the means for supplying an alternating current to the coil is arranged to maintain said alternating current constant irrespective of the penetration of the core element into the coil (Figures 6,7).

5. A position sensor as claimed in claim 4, in which the means for supplying an alternating current to the coil comprises an alternating wave generator, a current sensor is coupled to the coil and means providing feedback from the current sensor to the alternating wave generator (Figures 6,7).

6. A position sensor as claimed in any preceding claim, in which said d.c. output signal is applied to an output circuit fed from an adjustable power supply so that this circuit can be adjusted to adjust the change in its output per unit displacement of the core element of the sensor (Figure 5).

7. A position sensor as claimed in any preceding claim, in which the magnetic circuit which includes the coil and core element is operated in a linear portion of its hysteresis curve such that the voltage across the coil varies linearly with the position of the core element.

8. A position sensor which comprises a sensor coil, a core element of high magnetic permeability material for displacing into the coil, means for supplying an alternating current to the coil, the magnetic circuit which includes the coil and core element being operated in a linear portion of its hysteresis curve such that the voltage across the coil varies linearly with the position of the core element, and means responsive to the voltage across the coil to produce a d.c. output signal representing said voltage.

FIGURE 1

FIGURE 2

FIGURE 3

EP 0 404 534 A1

FIGURE 4

REG

IC1

VOUT

RT

CT

Rs

Rc

18

10

+V

ØV

EP 0 404 534 A1

FIGURE 5

EP 0 404 534 A1

FIGURE 6

FIGURE 7

FIGURE 8

FIGURE 9

FIGURE 10

| | **DOCUMENTS CONSIDERED TO BE RELEVANT** | | EP 90306712.2 |
|---|---|---|---|

| Category | Citation of document with indication, where appropriate, of relevant passages | Relevant to claim | CLASSIFICATION OF THE APPLICATION (Int Cl⁵) |
|---|---|---|---|
| A | <u>EP - A2 - 0 074 301</u> (BENDIX) <br> * Page 5, line 10 - page 8, line 29; fig. 2-5 * <br> -- | 1,2, 4-8 | G 01 D 5/20 |
| A | <u>EP - A1 - 0 174 227</u> (AUTOMOBILES PEUGEOT) <br> * Page 2, line 34 - page 7, line 27; fig. 1,3,5,6 * <br> -- | 1,2, 4-8 | |
| A | <u>DE - A1 - 3 225 822</u> (LUCAS INDUSTRIES) <br> * Pages 5-12; fig. 1-4 * <br> ---- | 1-3 | |
| | | | TECHNICAL FIELDS SEARCHED (Int Cl⁵) |
| | | | G 01 D 5/00 |

The present search report has been drawn up for all claims

| Place of search | Date of completion of the search | Examiner |
|---|---|---|
| VIENNA | 14-09-1990 | BAUER |